**Europäisches Patentamt**

**European Patent Office**

**Office européen des brevets**

(19)

(11) Veröffentlichungsnummer: **0 224 653**
**B1**

(12) **EUROPÄISCHE PATENTSCHRIFT**

(45) Veröffentlichungstag der Patentschrift:
**18.10.89**

(51) Int. Cl.⁴: **B25H 1/02**

(21) Anmeldenummer: **86111476.7**

(22) Anmeldetag: **19.08.86**

(54) Werktisch.

(30) Priorität: 30.10.85 DE 3538529
29.04.86 DE 8611721 U

(43) Veröffentlichungstag der Anmeldung:
**10.06.87 Patentblatt 87/24**

(45) Bekanntmachung des Hinweises auf die Patenterteilung:
**18.10.89 Patentblatt 89/42**

(84) Benannte Vertragsstaaten:
**AT BE CH DE FR GB IT LI NL SE**

(56) Entgegenhaltungen:
**EP-A- 0 148 617**
**WO-A-84/02102**
**US-A- 4 465 114**

(73) Patentinhaber: **Werkzeug-Gesellschaft mit beschränkter Haftung, Löhstrasse 15, D-5441 Weibern(DE)**

(72) Erfinder: **Wolff, Robert, Im Kiesacker 12, D-5446 Engeln(DE)**

(74) Vertreter: **Peerbooms, Rudolf, Dipl.-Phys., Postfach 200 208 Dickmannstrasse 45C, D-5600 Wuppertal 2(DE)**

ACTORUM AG

## Beschreibung

Die Erfindung betrifft einen Werktisch mit einer von einem Tischgestell getragenen Werkstück-Auflageplatte, an deren Unterseite eine Spanneinrichtung zur Befestigung einer Hand-Arbeitsmaschine, insbesondere einer Kreissäge, vorgesehen ist und welche mindestens einen Durchbruch für das Werkzeug der Arbeitsmaschine aufweist, wobei die Auflageolatte nach Art eines Doppelhebels am Tischgestell um eine Schwenkachse gelagert und aus ihrer Arbeitsstellung in eine um 180° gewendete Montagestellung schwenkbar ist, und wobei am Tischgestell eine Feststelleinrichtung für die Arbeitsstellung vorgesehen ist.

Mit derartigen Werktischen, die in den verschiedensten Ausführungsformen bekannt sind, kann beispielsweise eine mobile Hand-Kreissäge zu einer stationären Tisch-Kreissäge umgerüstet werden. Auf diese Weise können insbesondere Heimwerker für ihre Antriebsmaschinen erheblich erweiterte Nutzungsmöglichkeiten erschließen. Bei den bekannten Werktischen ist es aber nachteilig, daß sie zur Montage einer Arbeitsmaschine auf den Kopf gestellt werden müssen, um einen freien Zugang zur Unterseite der Werkstück-Auflageplatte zu haben. Dabei muß die Oberseite der Auflageplatte aufgesonderten Auflagestücken aufgesetzt werden, damit genügend Freiraum für das durch den Durchbruch der Auflageplatte hindurchragende Werkzeug bleibt. Die Umrüstung der bekannten Werktische ist daher stets mit einem erheblichen Aufwand verbunden.

Durch die US-PS 44 65 114 ist ein Sägetisch bekannt, dessen eine Kreissäge tragende Werkstück-Auflageplatte um eine Quermittelachse um 360° schwenkbar im Tischgestell gelagert ist. Die Fixierung der Auflageplatte in den beiden horizontalen Wendelagen erfolgt dort mittels im Tischgestell geführter Schrauben, deren freie Enden in an den Schmalseiten der Auflageplatte vorgesehene konische Aufnahmelöcher eingeführt werden. Eine solche Art der Lagefixierung ist allerdings zeitaufwendig und in Anbetracht der beim Sägen auftretenden Vibrationen nicht sicher.

Der Erfindung liegt die Aufgabe zugrunde, einen gattungsgemäßen Werktisch zu schaffen, bei welchem die Montage einer Hand-Arbeitsmaschine an der Unterseite der Auflageplatte sowie die Umrüstung auf andere Hand-Arbeitsmaschinen wesentlich vereinfacht sind und die Auflageplatte zumindest in der Arbeitsstellung sicher fixierbar ist.

Diese Aufgabe ist erfindungsgemäß dadurch gelöst, daß ein Ende der Auflageplatte in der Arbeitsstellung auf einem Anschlag des Tischgestelles aufliegt und daß das andere, gegenüberliegende Ende der Auflageplatte in der Arbeitsstellung mittels der Feststelleinrichtung elastisch hochbiegbar ist. Nach Schwenken der Auflageplatte in die Montagestellung ist die Unterseite der Auflageplatte in einer bequemen Montagehöhe frei zugänglich. Die Arbeitsmaschine kann ohne jede Hilfsvorrichtung auf der Auflageplatte aufgelegt und mit der Spanneinrichtung fixiert werden. Zwischen dem Fußboden und der Auflageplatte bleibt dabei selbstverständlich auch stets ein genügender Freiraum für das Werkzeug der Arbeitsmaschine. Durch die Feststelleinrichtung für beide Wendelagen ist während der Montage ein versehentliches Verschwenken der Auflageplatte samt der noch nicht befestigten Arbeitsmaschine sicher ausgeschlossen.

Bei der Ausführungsform nach der Erfindung kann der Werktisch sehr platzsparend aufgestellt werden, da für die Montagestellung der Auflageplatte kein zusätzlicher seitlicher Raum benötigt wird. In der Arbeitsstellung ist die Auflageplatte dreifach, und zwar am Tischgestell-Auflagepunkt, an der Schwenkachse und an der Feststelleinrichtung abgestützt, so daß sie auch größeren Belastungen standhalten kann. Da die Auflageplatte im übrigen mittels der Feststelleinrichtung elastisch hochbiegbar ist, ist eine völlig spielfreie vibrationsunempfindliche Feststellung gegenüber dem Tischgestell erreicht. Bei starren Gußauflageplatten kann dabei die Hochbiegung in der Größenordnung von Zehntelmillimetern liegen, bei leichteren Blech-Auflageplatten in der Größenordnung von halben Millimetern, wodurch die Werkstückführung nicht beeinträchtigt wird. Durch das elastische Hochbiegen der Auflageplatte wird zudem in erhöhtem Maß ein fester Sitz der Hand-Arbeitsmaschine oder sonstiger, an der Auflageplatte festgespannter Teil wie zum Beispiel einer Sägespalteinlage erreicht.

Der Erfindung zufolge kann die Auflageplatte rechteckig oder quadratisch sein wobei die Achse nahe bei einer ihrer Mittelachsen liegt. Gemäß der Erfindung kann schließlich die Auflageplatte in ihrer Arbeitsstellung mit einem zu der Schwenkachse parallelen Endrand auf dem Anschlag des Tischgestells aufliegen und kann die Feststelleinrichtung im Bereich des gegenüberliegenden Endrandes der Auflageplatte angreifen.

In Ausgestaltung der Erfindung kann der Anschlag eine parallel zum anschlagseitigen Endrand ausgerichtete, gestellfeste Anschlagleiste sein und kann die Schwenkachse auf der der Anschlagleiste abgewandten Seite ein Stück weit neben der entsprechenden Mittelachse der Auflageplatte liegen. Die Anschlagleiste gewährleistet eine sehr breite, stabile Auflage der Auflageplatte. Durch die versetzte Anordnung der Schwenkachse ist es möglich, daß beim Wenden der ursprünglich auf der Seite der Feststelleinrichtung liegende Endrand frei und ohne Demontage eines evtl. Parallelanschlags an der Anschlagleiste vorbeischwenken kann.

Gemäß der Erfindung kann die Auflageplatte mittels der Feststelleinrichtung an den Anschlag andrückbar sein. Vorzugsweise kann die Feststelleinrichtung aus zwei beidseits der Auflageplatte angeordneten Exzenterhebeln bestehen, welche an die Auflageplatte einfassenden Seitenrahmen des Tischgestells gelagert sind und mit welchen die Auflageplatte aus einer losen Auflagestellung heraus gegen den Anschlag andrückbar ist.

Gemäß der Erfindung kann das Tischgestell vier an den Enden der Seitenrahmen befestigte Beine umfassen und können die anschlagseitigen Beine durch die Anschlagleiste und die gegenüberliegenden Beine durch eine tiefer liegende Querstrebe miteinander verbunden sein. Die beiden Seitenrahmen, die Anschlagleiste und die Querstrebe bilden einen in sich geschlossenen Rahmen, womit das Tischgestell trotz der Verschwenkbarkeit der Auflageplatte eine große innere Steifigkeit erhält. Die tiefer liegende Anordnung der Querstrebe ist erforderlich, um ein freies Vorbeischwenken der Auflageplatte zu ermöglichen.

In weiterer Ausgestaltung der Erfindung kann die Auflageplatte mehrere Durchbrüche für die Werkzeuge unterschiedlicher Arbeitsmaschinen aufweisen. Damit ist die Umrüstung des Werktisches weiter vereinfacht, da die jeweils gewünschte Arbeitsmaschine ohne Adapterstücke oder ähnliche Vorrichtungen direkt auf die Auflageplatte aufgesetzt und dort montiert werden kann.

Mit derartigen Werktischen kann eine mobile Hand-Kreissäge zu einer stationären Tisch-Kreissäge umgerüstet werden. Beim Einsatz als Kreissäge empfiehlt es sich, den schlitzförmigen Durchbruch in der im allgemeinen aus Stahlblech bestehenden Werkstück-Auflageplatte mit einer zerspanbaren Spalteinlage aus beispielsweise Aluminium oder Kunststoff zu versehen. Sollte beim Sägen sich das Sägeblatt zur Seite hin verlagern, wird der Benutzer rasch darauf aufmerksam, daß das Sägeblatt sich in die Spalteinlage einfrißt und daß also die Kreissäge wieder ausgerichtet und erneut an der Auflageplatte festgespannt werden muß. Durch die Verwendung einer leicht zerspanbaren Spalteinlage wird dabei der Gefahr vorgebeugt, daß bei hartmetallbestückten Kreissägeblättern die Hartmetallstücke vom Sägeblatt abspringen.

Werden dagegen an der Unterseite der Werkstück-Auflageplatte andere Geräte, z.B. Stichsägen oder Oberfräsen angebracht oder wird der Werktisch als einfacher Arbeitstisch benutzt, ist eine solche Spalteinlage nicht erforderlich. Damit die Spalteinlage im Falle einer Zerstörung bequem gegen eine neue auswechselbar ist, ist in weiterer Ausgestaltung der Erfindung eine den Durchbruch auskleidende Spalteinlageplatte aus zerspanbarem Material vorgesehen, welche beidseits des Durchbruches an der Unterseite der Werkstück-Auflageplatte anliegt und mittels der Spanneinrichtung für die Kreissäge zwischen der Unterseite der Auflageplatte und der Kreissägen-Führungsplatte auswechselbar eingeklemmt ist. Dies erbringt den Vorteil, daß für die Spalteinlage nur ein einziges, loses Bauteil benötigt wird, welches unter Verwendung der ohnehin vorhandenen Spanneinrichtung für die Kreissäge zuverlässig an der Auflageplatte festspannbar und im Bedarfsfall mit wenigen Handgriffen gegen eine neue Spalteinlageplatte auswechselbar ist. Da bei dem Werktisch nach der Erfindung die Auflageplatte um 180° in eine Montagestellung geschwenkt werden kann, in der ihre Unterseite oben liegt, kann die Spalteinlageplatte mühelos zusammen mit der Führungsplatte der Hand-Kreissäge mittels der üblicherweise als Spanneinrichtung verwendeten Spannpratzen festgeklemmt werden.

Nach weiteren Merkmalen der Erfindung weist die Spalteinlageplatte einen schlitzförmigen Durchbruch für den Durchtritt des Sägeblattes auf, der enger als der Durchbruch der Auflageplatte ist und dessen Randbereich als Auskleidung in den Durchbruch der Auflageplatte hochgezogen ist. Vorteilhafterweise ist der hochgezogene Randbereich dabei als ein in sich geschlossener Kragen ausgebildet, so daß sich automatisch eine Zentrierung der Spalteinlageplatte ergibt.

Die Auflageplatte kann ferner längs zweier zu ihrem Durchbruch paralleler Reihen mit konischen Eindrückungen versehen sein, deren untere Spitzen jeweils auf gleicher Höhe abgeschnitten sind, und die Einlageplatte kann mit zwei auf diese Höhe doppelt abgekröpften Randstreifen versehen sein, in welchen mehrere auf die Löcher der Auflageplatte ausgerichtete Befestigungslöcher für die Schrauben der Spanneinrichtung vorgesehen sind. Durch diese Schrauben wird die Zentrierung der Spalteinlageplatte zusätzlich gesichert.

Schließlich kann der Erfindung zufolge noch vorgesehen werden, daß in der Einlageplatte weitere Durchbrüche für die Werkzeuge von an der Unterseite der Auflageplatte festspannbaren Stichsägen, Oberfräsen oder dgl. jeweils in Fluchtung mit den entsprechenden weiteren Durchbrüchen in der Werkstück-Auflageplatte vorgesehen sind. Hierdurch ist es möglich, die Spalteinlageplatten auch beim Einsatz dieser anderen Maschinen an der Werkstück-Auflageplatte zu belassen, wodurch die Handhabung des Werkstückes beim Umrüsten vereinfacht wird.

Der Werktisch nach der Erfindung wird im folgenden anhand der Zeichnung näher beschrieben. Es zeigen:

Fig. 1 einen Werktisch in perspektivischer Darstellung,

Fig. 2 den Werktisch mit in ihrer Arbeitsstellung festgesetzter Werkstück-Auflageplatte gemäß einem Schnitt II-II in Fig. 1,

Fig. 3 den Werktisch beim Verschwenken der Auflageplatte in einer analogen Darstellung zu Fig. 2,

Fig. 4 den Werktisch mit in Montagestellung festgesetzter Auflageplatte in einer analogen Darstellung zu Fig. 2,

Fig. 5 den Werktisch gemäß einem Schnitt V-V in Fig. 1,

Fig 6 eine Feststelleinrichtung für die Auflageplatte gemäß einem Schnitt VI-VI in Fig. 1,

Fig. 7 die Feststelleinrichtung in entspannter Stellung in einer analogen Darstellung zu Fig. 6,

Fig. 8 eine abgewandelte Ausführungsform der Werkstück-Auflageplatte in einer Ansicht von unten,

Fig. 9 die Werkstück-Auflageplatte nach Fig. 8 mit aufgelegter Spalteinlageplatte,

Fig. 10 einen Schnitt gemäß der Linie X-X in Fig. 9,

Fig. 11 ausschnittsweise und in vergrößertem Maßstab die Spalteinlageplatte nach den Fig. 9 und 10 in festgeklemmter Stellung, und

Fig. 12 bis 14 eine abgewandelte Auführungsform der Feststelleinrichtung für die Auflageplatte.

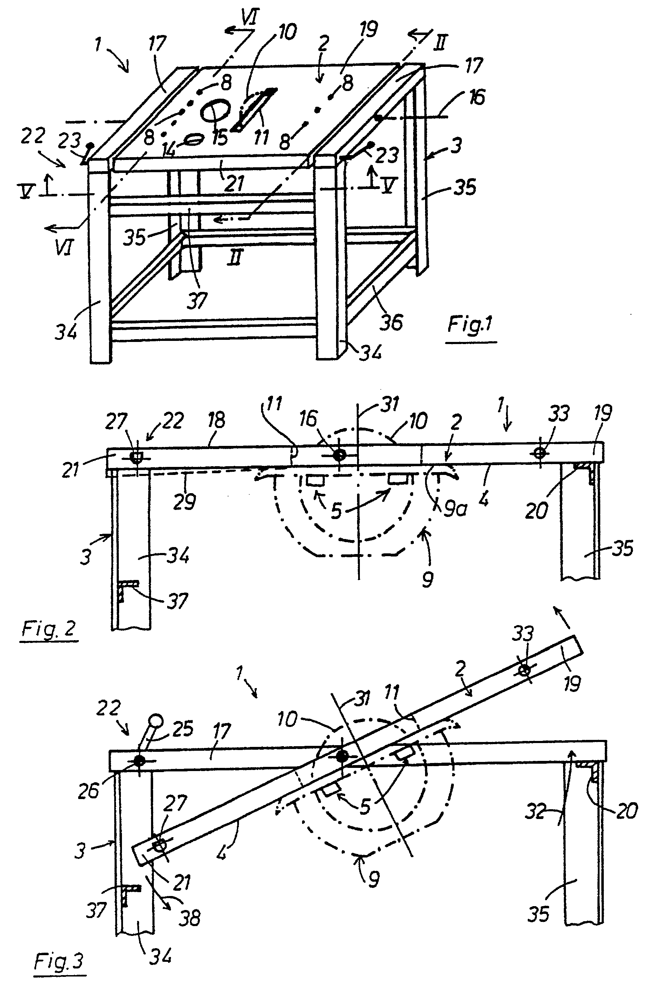

Die Fig. 1 bis 7 veranschaulichen den Aufbau und die Funktion eines Werktisches 1 mit einer Werkstück-Auflageplatte 2, welche von einem Tischgestell 3 getragen ist.

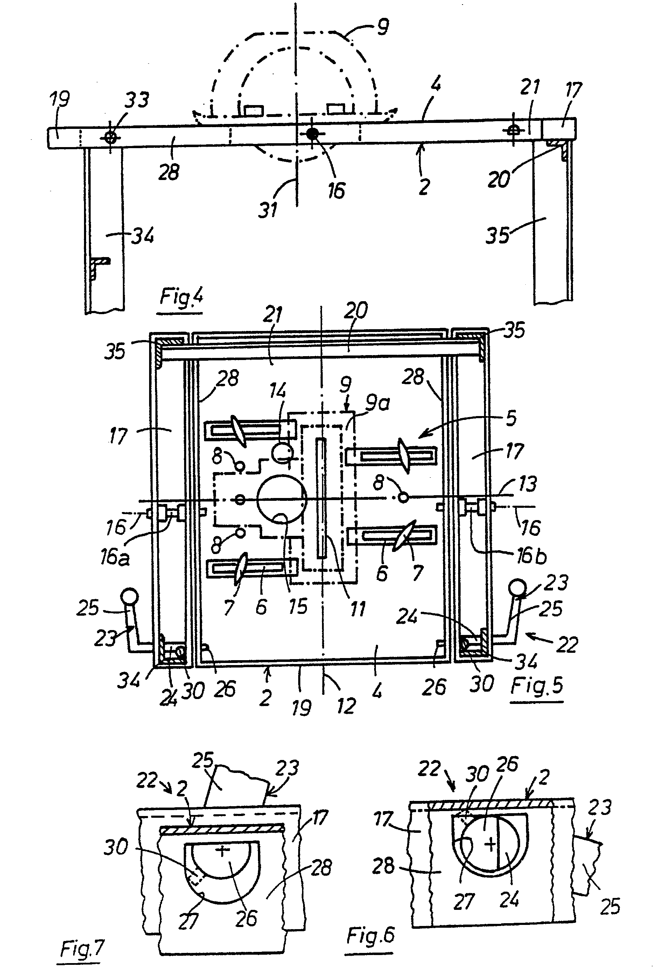

Wie insbesondere aus den Fig. 2 und 5 hervorgeht, ist an der Unterseite 4 der Auflageplatte 2 eine Spanneinrichtung 5 vorgesehen, welche aus mehreren Spannpratzen 6 mit zugeordneten Spannschrauben 7 besteht. Zur Befestigung der Spannschrauben 7 sind in der Auflageplatte 2 mehrere Befestigungslöcher 8 vorgesehen, so daß an der Unterseite 4 nahezu alle Typen von üblichen Hand-Arbeitsmaschinen festspannbar sind. In dem gezeigten Ausführungsbeispiel ist mit strichpunktierten Linien eine Führungsplatte 9a aufweisende Hand-Kreissäge 9 dargestellt, deren Sägeblatt 10 einen spaltförmigen Durchbruch 11 der Auflageplatte 2 durchsetzt. Der Durchbruch 11 ist auf dem Kreuzungspunkt der Mittelachsen 12, 13 der Auflageplatte 2 angeordnet. Neben dem Durchbruch 11 befinden sich darüber hinaus weitere Durchbrüche 14, 15, welche die Montage einer Stichsäge bzw. einer Oberfräse gestatten.

Die Auflageplatte 2 ist aus ihrer in Fig. 2 gezeigten Arbeitsstellung um eine Schwenkachse 16 herum um 180° in eine Montagestellung gemäß Fig. 4 schwenkbar, bei welcher die Unterseite 4 frei zugänglich ist. Die Schwenkachse 16, die von zwei in den Seitenrahmen 17 der Auflageplatte 2 gelagerten und in Löcher in den Seitenwangen der Auflageplatte 2 eingreifenden Lagerbolzen 16a, 16b gebildet ist, liegt versetzt zur Quermittelachse 13 der Auflageplatte 2. Die Seitenrahmen 17 des Tischgestells 3 fassen die Auflageplatte 2 beidseits ein und bilden zusammen mit der Oberseite 18 der Auflageplatte 2 eine gemeinsame Auflageebene für Werkstücke oder dgl. In der Arbeitsstellung liegt die Auflageplatte 2 mit einem zur Schwenkachse 16 parallelen, hinteren Endrand 19 auf einem leistenförmigen Anschlag 20 des Tischgestells 3 auf, während am gegenüberliegenden, in Arbeitsstellung vorderen Endrand 21 eine Feststelleinrichtung 22 angreift.

Die Feststelleinrichtung 22 besteht aus zwei beidseits der Auflageplatte 2 angeordneten Exzenterhebeln 23, welche jeweils aus einem Lagerbolzen 24 und einem endseitig etwa senkrecht davon abragenden, einarmigen Bedienungshebel 25 mit Spanngriff aufgebaut sind. Die Lagerbolzen 24 sind in den Seitenrahmen 17 gelagert und greifen mit einem einseitig abgeflachten Bereich 26 in eine zugeordnete, ebenfalls einseitig abgeflachte, aber größere Öffnung 27 ein, welche in heruntergezogenen Seitenwangen 28 der Auflageplatte 2 eingebracht ist.

Aufgrund der exzentrischen Form der abgeflachten Bolzenbereiche 26 kann die Auflageplatte 2 aus einer losen Auflagestellung heraus durch Umlegen der Bedienungshebel 23 gegen den Anschlag 20 angedrückt werden (vgl. Fig. 6), wobei die Auflageplatte 2 auf Seiten der Feststelleinrichtung 22 eine elastische Hochbiegung erfährt. In Fig. 2 ist hier die entspannte Lage durch eine gestrichelte Linie 29 angedeutet, während die festgespannte Lage mit durchgezogenen Linien voll ausgezeichnet ist.

In der entspannten Stellung ragen die einarmigen Bedienungshebel 25 der Exzenterhebel 23 etwa senkrecht nach oben, während sie in der Spannstellung etwa parallel zur Auflageplatte, also horizontal, ausgerichtet sind. Zur Freigabe der Auflageplatte 2 können die abgeflachten Bolzenbereiche 26 aus den Öffnungen 27 der Auflageplatte 2 herausgezogen werden, wobei Anschlagstifte 30 ein vollständiges Herausziehen der Lagerbolzen 24 aus den Seitenrahmen 17 verhindern (vgl. Fig. 5). Die Anschlagstifte 30 können im übrigen für eine Begrenzung des Drehweges der Exzenterhebel 23 benutzt werden (vgl. Fig. 6 und 7).

Nach Freigabe kann die Auflageplatte 2 entsprechend Fig. 3 frei verschwenkt werden. Die Schwenkachse 16 liegt dabei auf der Seite der Feststelleinrichtung 22 ein Stück weit neben der entsprechenden Mittelachse 13 der Auflageplatte 2 bzw. neben der mittleren Flächennormalen 31. Somit kann der Endrand 21, der in der Arbeitsstellung auf Seite der Feststelleinrichtung 22 liegt, frei an der Anschlagleiste 20 vorbeigeschwenkt werden, wie es in Fig. 3 durch einen Pfeil 32 angedeutet ist. Zur Festsetzung der Montagestellung nach Fig. 4 sind in den Seitenwangen 28 der Auflageplatte 2 im Bereich des ursprünglich anschlagseitigen Endrandes 19 weitere Öffnungen 33 vorgesehen, in die die Lagerbolzen 24 mit ihren abgeflachten Bereichen 26 einführbar sind. Für provisorische Arbeiten genügt es auch, die Auflageplatte 2 lose auf den Lagerbolzen 24 aufzulegen. Da die Durchbrüche 11, 14, 15 seitlich versetzt zur Schwenkachse 16 liegen und folglich die Antriebsmaschine 9 außermittig zur Schwenkachse 16 montiert ist, liegt die Auflageplatte 2 in der Montagestellung nach Fig. 4 bereits mit Übergewicht an ihrem Endrand 19 auf den Lagerbolzen 24 auf, so daß eine Festsetzung mittels der Feststelleinrichtung 22 an den Löchern 33 eine zusätzliche Sicherheitsmaßnahme darstellt.

Das Tischgestell 3 umfaßt vier an den Enden der Seitenrahmen 17 befestigte Beine 34, 35, wobei die anschlagseitigen Beine 35 durch die Anschlagleiste 20 miteinander verbunden sind. Zusätzlich sind die Beine 34, 35 durch einen Fußrahmen 36 miteinander verstrebt (vgl. Fig. 1). Zur zusätzlichen Versteifung des Tischgestells 3 sind die Beine 34 auf Seiten der Feststelleinrichtung 22 durch eine weitere Querstrebe 37 miteinander verbunden, die etwas tiefer als die Anschlagleiste 20 liegt. Infolgedessen kann der Endrand 21 der Anschlagplatte 2 auch diese Querstrebe 37 beim Verschwenken frei passieren, wie durch den Pfeil 38 in Fig. 3 angedeutet ist.

Der Werktisch 1 kann trotz der Verschwenkbarkeit der Auflageplatte 2 durch alle üblichen Zusatzeinrichtungen ergänzt werden. Hier sind insbesondere eine Schutzabdeckhaube für das Sägeblatt 10 einer Kreissäge 9 zu nennen, an den Seitenrahmen 17 anbringbare Verbreiterungsstücke für die Werkstückauflagefläche, Notschalter für die Arbeitsmaschinen, winkelfeste oder verschwenkbare Anschläge für die Werkstücke usw. Die Ergänzungselemente sind in der Zeichnung der Übersichtlichkeit halber nicht im einzelnen dargestellt.

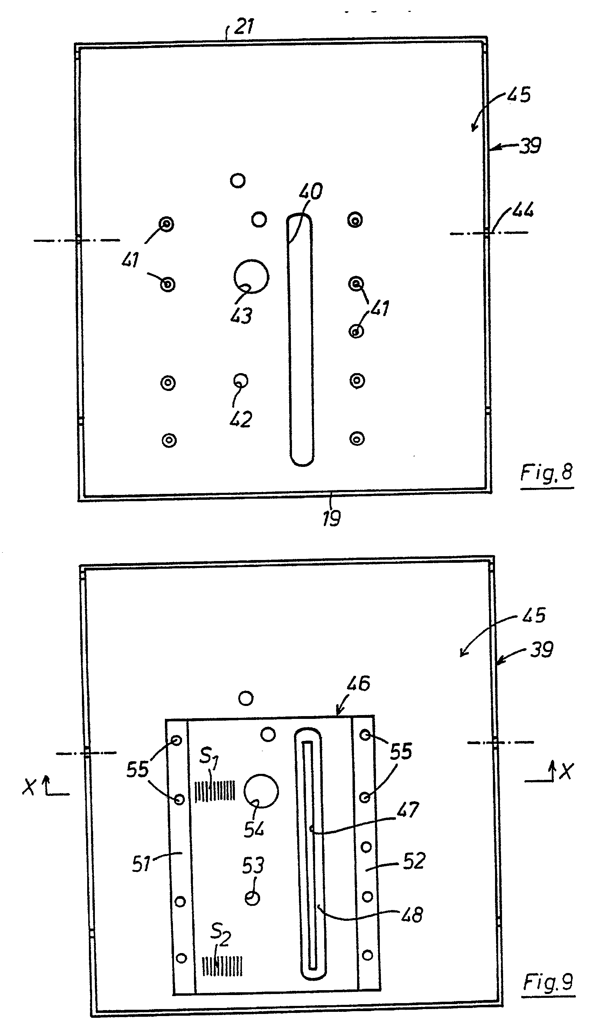

Die Fig. 8 bis 11 zeigen eine weitere Ausführungsform einer Werkstück-Auflageplatte 39 in einer Ansicht von unten und in einer Stellung analog Fig. 5. Der längliche Durchbruch 40 für den Durchtritt des Kreissägeblattes, die Befestigungslöcher 41 für die Schrauben der Spannpratzen 6 sowie die Durchbrüche 42 und 43 für eine Stichsäge bzw. für eine Oberfräse liegen bei diesem Ausführungsbeispiel im wesentlichen zwischen dem anschlagseitigen Rand 19 der Platte 39 und der Schwenkachse 44.

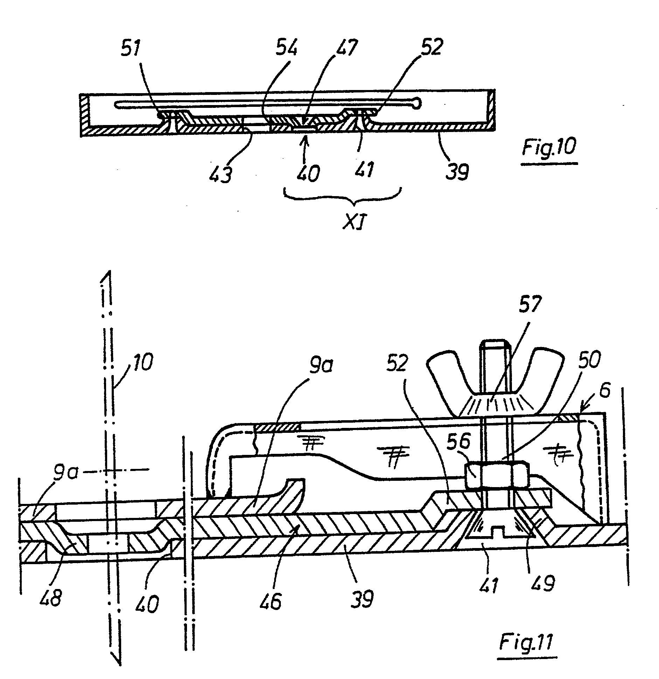

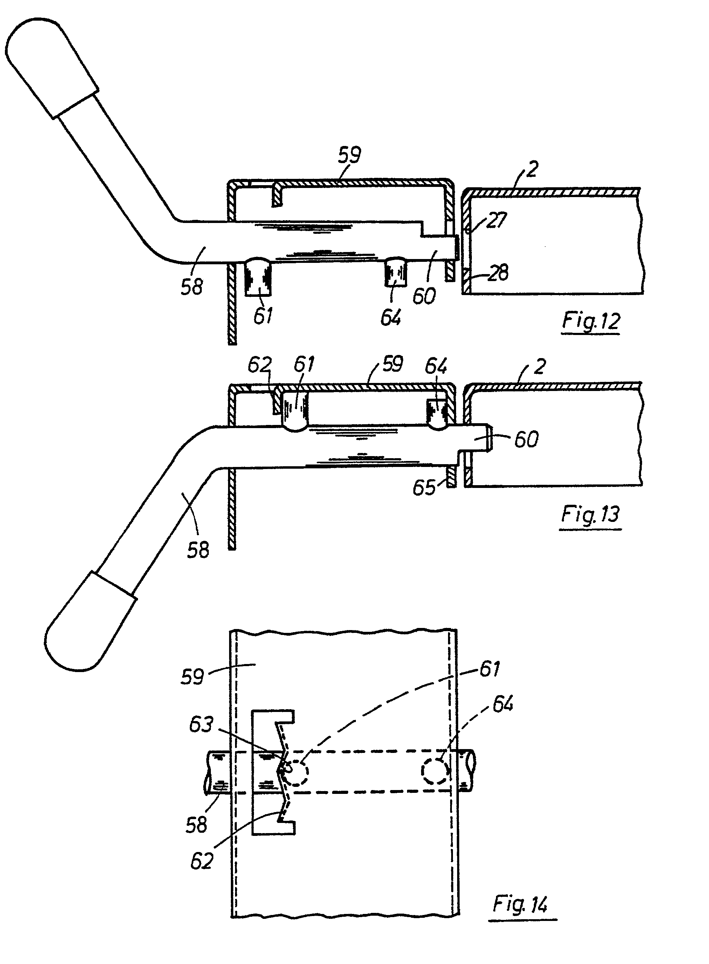

Fig. 9 zeigt eine auf die Unterseite 45 der Auflageplatte 39 aufgelegte Spalteinlageplatte 46, welche einen schlitzförmigen Durchbruch 47 aufweist, der enger als der Durchbruch 40 der Auflageplatte 39 ist und dessen Randbereich 48 in den Durchbruch 40 hochgezogen ist und einen in sich geschlossenen umlaufenden Kragen darstellt. Wie insbesondere aus Fig. 11 ersichtlich ist, die den Ausschnitt XI in Fig. 10 in vergrößertem Maßstab zeigt, ist die Auflageplatte 39 im Bereich ihrer Befestigungslöcher 41 jeweils mit einer konischen Eindrückung 49 versehen, deren Spitzen auf einer bestimmten Höhe unter Bildung der Durchtrittsöffnungen 41 für die Senkkopf-Befestigungsschraube 50 der Spannpratzen 6 abgeschnitten sind. Die Einlageplatte 46 weist zwei auf diese Höhe doppelt abgekröpfte Randstreifen 51, 52 auf, in denen mehrere auf die Löcher 41 der Auflageplatte 39 ausgerichtete Befestigungslöcher 55 für die Schrauben 50 der Spanneinrichtung vorgesehen sind. Wie in Fig. 11 veranschaulicht, ist die Spalteinlageplatte 46 einerseits durch Kontermuttern 56 gehalten und andrerseits bei der Anbringung einer Kreissägemaschine zwischen der Auflageplatte 39 und der Führungsplatte 9a der Kreissäge mittels derselben Spannpratzen 6 bzw. deren Mutter 57 festgespannt, mit denen auch die Kreissäge befestigt ist. Ferner ist die Einlageplatte 46 noch mit zwei Durchbrüchen 53, 54 versehen, die auf die Durchbrüche 42, 43 der Auflageplatte 39 fluchtend ausgerichtet sind.

Beim Festspannen der Arbeitsmaschine werden die beiden an der Einlageplatte 46 vorgesehenen Skalen S 1 und S 2 zur Parallelausrichtung und ggfs. zur Festlegung der seitlichen Versetzung z.B. der Kreissäge 9 benutzt, wenn das Kreissägeblatt 10 in gegenüber der Tischplatte geneigter z.B. um 45°, Lage festgespannt werden soll.

Die Fig. 12 bis 14 zeigen eine abgewandelte Ausführungsform der Feststelleinrichtung für die Auflageplatte 2.

In Fig. 12 ist der Bedienungshebel 58 zurückgezogen, so daß die Auflageplatte 2 entriegelt ist. In der entriegelten Stellung liegt die Oberseite der Auflageplatte 2 etwas tiefer als die Oberseite des Seitenrahmens 59. Zur Verriegelung wird der Bedienungshebel 58 einwärts geschoben, wobei sein abgeflachter, exzentrischer Bolzenbereich 60 in die Öffnung 27 in der Seitenwand 28 der Auflageplatte 2 eingeschoben wird. Anschließend wird der Bedienungshebel um 180° in die Stellung nach Fig. 13 gedreht, wobei die Auflageplatte 2 auf das Niveau des Seitenrahmens 59 elastisch hochgebogen wird. Zur Sicherung der Verriegelungsstellung nach Fig. 13 ist der Bedienungshebel 58 mit einem radial abragenden Zapfen 61 versehen, der hinter eine aus der Oberseite des Seitenrahmens 59 nach unten ausgedrückte Zunge 62 geschwenkt wird, wodurch in Verbindung mit dem Gewicht des in dieser Stellung nach unten gerichteten Griffendes des Bedienungshebels 58 sichergestellt wird, daß der Bedienungshebel in der Arretierstellung nach Fig. 13 nicht infolge Vibrationen drehen und nach außen in die Entriegelungsstellung sich bewegen kann.

Wie aus der Draufsicht nach Fig. 14 ersichtlich ist, kann als zusätzliche Sicherheitsmaßnahme die Zunge 62 in Längsrichtung schwach wellenförmig abgebogen sein, so daß sich eine Aufnahmemulde 63 für den Zapfen 61 ergibt und somit der Bedienungshebel 58 auch gegen ein ungewolltes Drehen um seine Längsachse verrastet ist. Der Bedienungshebel ist noch mit einem zweiten radial abragenden Zapfen 64 versehen, der in der Verriegelungsstellung an der Innenseite der, der Auflageplatte 2 benachbarten Seitenwangen 65 des Seitenrahmens 59 anliegt und dabei sicherstellt, daß der Zapfen 61 in der Verriegelungsstellung in der Mulde 63 gehalten ist. Eine Entriegelung ist somit nur durch ein gewolltes, mit deutlicher Kraftaufwendung verbundenes Verschwenken des Bedienungshebels 58 möglich.

## Patentansprüche

1. Werktisch (1) mit einer von einem Tischgestell (3) getragenen Werkstück-Auflageplatte (2), an deren Unterseite (4) eine Spanneinrichtung (5) zur Befestigung einer Hand-Arbeitsmaschine, insbesondere einer Kreissäge (9), vorgesehen ist und welche mindestens einen Durchbruch (11) für das Werkzeug der Arbeitsmaschine aufweist, wobei die Auflageplatte (2) nach Art eines Doppelhebels am Tischgestell (3) um eine Schwenkachse (16) gelagert und aus ihrer Arbeitsstellung in eine um 180° gewendete Montagestellung schwenkbar ist, und wobei am Tischgestell (3) eine Feststelleinrichtung (22) für die Arbeitsstellung vorgesehen ist, dadurch gekennzeichnet, daß ein Ende (19) der Auflageplatte in der Arbeitsstellung auf einem Anschlag (20) des Tischgestelles aufliegt und daß das andere, gegenüberliegende Ende (21) der Auflageplatte (2) in der Arbeitsstellung mittels der Feststelleinrichtung (22) elastisch hochbiegbar ist.

2. Werktisch nach Anspruch 1, dadurch gekennzeichnet, daß die Auflageplatte (2) aus einer Gußplatte oder aus Stahlblech besteht.

3. Werktisch nach Anspruch 1 oder 2, dadurch gekennzeichnet, daß die Auflageplatte (2) rechteckig oder quadratisch ist wobei die Achse (16) nahe bei einer ihrer Mittelachsen (13) liegt.

4. Werktisch nach Anspruch 2 oder 3, dadurch gekennzeichnet, daß die Auflageplatte (2) in ihrer Arbeitsstellung mit einem zu der Schwenkachse (16) parallelen Endrand (19) auf dem Anschlag (20) des Tischgestells (3) aufliegt und daß die Feststelleinrichtung (22) im Bereich des gegenüberliegenden Endrandes (21) der Auflageplatte (2) angreift.

5. Werktisch nach Anspruch 4, dadurch gekennzeichnet, daß der Anschlag (20) eine parallel zum anschlagseitigen Endrand (19) ausgerichtete, gestellfeste Anschlagleiste ist und daß die Schwenkachse (16) auf der der Anschlagleiste (20) abgewandten Seite ein Stück weit neben der entsprechenden Mittelachse (13) der Auflageplatte (2) liegt.

6. Werktisch nach den Ansprüchen 4 oder 5, dadurch gekennzeichnet, daß die Auflageplatte (2) mittels der Feststelleinrichtung (22) an den Anschlag (20) andrückbar ist.

7. Werktisch nach Anspruch 6, dadurch gekennzeichnet, daß die Feststelleinrichtung (22) aus zwei beidseits der Auflageplatte (2) angeordnete Exzenterhebeln (23) besteht, welche an die Auflageplatte (2) einfassenden Seitenrahmen (17) des Tischgestells (3) gelagert sind und mit welchen die Auflageplatte (2) aus einer losen Auflagestellung heraus gegen den Anschlag (20) andrückbar ist.

8. Werktisch nach Anspruch 7, dadurch gekennzeichnet, daß die Exzenterhebel (23) jeweils einen Lagerbolzen (24) aufweisen, der auf einem Teil seiner Länge einseitig abgeflacht ist, daß die abgeflachten Bolzenbereiche (26) als Exzenter in Öffnungen (27) einschiebbar sind, welche in heruntergezogenen Seitenwangen (28) der Auflageplatte (2) eingebracht sind, und daß die Seitenwangen (28) am gegenüberliegenden Längsende jeweils eine zweite Öffnung (33) zur Festsetzung der Auflageplatte (2) in der Montagestellung aufweisen.

9. Werktisch nach Anspruch 7 oder 8, dadurch gekennzeichnet, daß die Exzenterhebel (23) mit endseitig etwa senkrecht von den Lagerbolzen (24) abragenden, einarmigen Bedienungshebeln (25) versehen sind, welche in der Spannstellung etwa parallel zur Auflageplatte (2) oder nach unten gerichtet sind und in der entspannten Stellung etwa senkrecht nach oben abragen.

10. Werktisch nach einem der Ansprüche 7 bis 9, dadurch gekennzeichnet, daß das Tischgestell (3) vier an den Enden der Seitenrahmen (17) befestigte Beine (34, 35) umfaßt und daß die anschlagseitigen Beine (35) durch die Anschlagleiste (20) und die gegenüberliegenden Beine (34) durch eine tiefer liegende Querstrebe (37) miteinander verbunden sind.

11. Werktisch nach Anspruch 10, dadurch gekennzeichnet, daß die Beine (34, 35) zusätzlich durch einen Fußrahmen (36) verstrebt sind.

12. Werktisch nach einem oder mehreren der Ansprüche 1 bis 11, dadurch gekennzeichnet, daß die Auflageplatte (2) mehrere Durchbrüche (11, 14, 15) für die Werkzeuge unterschiedlicher Arbeitsmaschinen aufweist.

13. Werktisch nach einem oder mehreren der vorangegangenen Ansprüche, gekennzeichnet durch eine den Kreissägeblatt-Durchbruch (40) der Auflageplatte (39) auskleidende Spalteinlageplatte (46) aus zerspanbarem Material, welche beidseits des Durchbruchs (40) an der Unterseite der Werkstück-Auflageplatte (39) anliegt und mittels der Spanneinrichtung (5) für die Kreissäge (9) zwischen der Unterseite der Auflageolatte (39) und der Kreissägen-Führungsplatte (9a) auswechselbar eingeklemmt ist.

14. Werktisch nach Anspruch 13, dadurch gekennzeichnet, daß die Spalteinlageplatte (46) einen schlitzförmigen Durchbruch (47) für den Durchtritt des Sägeblattes (10) aufweist, der enger als der Durchbruch (40) der Auflageplatte (39) ist und dessen Randbereich (48) als Auskleidung in den Durchbruch (40) der Auflageplatte (39) hochgezogen ist.

15. Werktisch nach Anspruch 14, dadurch gekennzeichnet, daß der hochgezogene Randbereich (48) als in sich geschlossener umlaufender Kragen ausgebildet ist.

16. Werktisch nach einem der Ansprüche 13 bis 15, dadurch gekennzeichnet, daß die Auflageplatte (39) längs zweier, zum Durchbruch (40) paralleler Reihen mit konischen Eindrückungen (49) versehen ist, deren untere Spitzen jeweils auf gleicher Höhe abgeschnitten sind, und daß die Einlageplatte (46) mit zwei auf diese Höhe doppelt abgekröpften Randstreifen (51, 52) versehen ist, in welchen mehrere auf die Löcher (41) der Auflageplatte (39) ausgerichtete Befestigungslöcher (53) für die Schrauben (50) der Spanneinrichtung (5) vorgesehen sind.

17. Werktisch nach einem oder mehreren der vorangegangenen Ansprüchen, dadurch gekennzeichnet, daß in der Einlageplatte (46) weitere Durchbrüche (53, 54) für die Werkzeuge von an der Unterseite der Auflageplatte festspannbaren Stichsägen, Oberfräsen oder dgl. jeweils in Fluchtung mit entsprechenden weiteren Durchbrüchen (42, 43) der Auflageplatte (39) vorgesehen sind.

18. Werktisch nach Anspruch 9, dadurch gekennzeichnet, daß an der Unterseite des Seitenrahmens (59) ein Anschlag (62) vorgesehen ist und daß der Bedienungshebel mit einem radial abragenden Zapfen (61) versehen ist, welcher in der Verriegelungsstellung klemmend hinter den Anschlag (62) greift.

## Claims

1. A work table 1 with a workpiece supporting panel 2 mounted on a trestle 3, the workpiece supporting panel 2 being equipped on its underside 4 with a clamping device 5 for clamping a hand-operated machine tool, more particularly a circular saw 9. The supporting panel has at least one cut-out 11 to accommodate the tool part of the machine tool. The supporting panel 2 is positioned in the manner of a double lever on a pivotal axis 16 on the trestle 3 and may be pivoted through 180 degrees from its operating position to a mounting position. On the trestle 3 there is a locking device 22 for locking the supporting panel 2 in the operating position, characterised in that one end 19 of the supporting panel 2 when in the operating position rests on an abutment 20 on the trestle 3 and that the other, opposite end 21 of the supporting panel 2 may be elastically bent upwards using the locking device 22.

2. A work table according to Claim 1, characterised in that the supporting panel is a cast metal plate or a steel sheet.

3. A work table according to Claims 1 or 2, characterised in that the supporting panel 2 is rectangular or square, the axis 16 lying close to one of its axes of symmetry.

4. A work table according to Claim 2 or 3, characterised in that the supporting panel 2, in the operating position, rests with one end, which is parallel to pivotal axis 16, on the abutment 20 of the trestle 3 and that the locking device 22 engages in the area of the opposite end 21 of the supporting panel.

5. A work table according to Claim 4, characterised in that the abutment 20 is a rigidly mounted abutment strip parallel to the end 19 lying next to the abutment strip, and that the pivotal axis 16 lies on the side facing away from the abutment strip spaced from and adjacent to the respective axis of symmetry 13 of the supporting panel.

6. A work table according to Claims 4 or 5, characterised in that the supporting panel 2 can be pressured against the abutment 20 by means of the locking device 22.

7. A work table according to Claim 6, characterised in that the locking device 22 consists of two eccentric levers 23 arranged on either side of the supporting panel, positioned on the side frame 17 of the trestle 3 encompassing the supporting panel 2, and by means of which the supporting panel 2 may be pressured from a loose resting position against the abutment strip 20.

8. A work table according to Claim 7, characterised in that the eccentric levers 23 each have a bearing pin 24, which is flattened on one side along a portion of its length, in that the flattened areas of the bearing pins may be inserted as eccentrics in openings 27 in downward extending side walls 28 of the supporting panel 2, and in that the side walls 28 have at the respective opposite longitudinal ends a second opening 33 for fixing the supporting panel 2 in the mounting position.

9. A work table according to Claims 7 or 8, characterised in that the eccentric levers 23 are equipped with one-armed operating levers 25 projecting more or less perpendicularly from the bearing pins at an end side. These levers 25 lie almost parallel to the supporting plate 2, or point downwards, in the clamping position, and in the unclamped position project more or less vertically upwards.

10. A work table according to Claims 7 to 9, characterised in that the trestle 3 includes four legs 34, 35 fixed to the ends of the side frames 17 and in that the legs 35 on the abutment strip 20 side are connected by the abutment strip 20 and the opposite legs 34 are connected by a cross strut 37 positioned lower down.

11. A work table according to Claim 10, characterised in that the legs, 34, 35 are additionally braced by a base frame.

12. A work table according to one or more of Claims 1 to 11, characterised in that the supporting panel 2 contains a number of cutouts 11, 14, 15 to accommodate the tool component of various machine tools.

13. A work table according to one or more of the above Claims, characterised by a slot insert plate 46 of chippable material covering the circular saw cutout in the supporting panel 39, and which lies on either side of the cutout on the underside of the workpiece supporting panel 39 and may be replaceably fastened between the underside of the supporting panel 39 and the circular saw guide panel 9a using the clamping device 5.

14. A work table according to Claim 13, characterised in that the slot insert plate 46 has an opening in the form of a slot 47 to accommodate the saw blade 10, this slot being narrower than the opening 40 in the supporting panel 39 and its edge area 48 being raised as a cover into the opening 40 in the supporting panel 39.

15. A work table according to Claim 14, characterised in that the raised edge area 48 takes the form of a closed circumferential collar.

16. A work table according to Claims 13 to 15, characterised in that the supporting panel 39 is equipped along two rows parallel to the opening 40 with conical depressions, whose lower tips are each cut off at the same height, and in that the slot insert plate 46 is equipped with two edge strips 51, 52, double bent to this height, in which several mounting holes 53, aligned with the holes 41 in the supporting panel 39, are provided for the mounting bolts 50 of the clamping device 5.

17. A work table according to one or more of the above mentioned Claims, characterised in that in the slot insert plate 46 further openings 53, 54 are provided to accommodate the tool components of a compass saws or router, etc which may be clamped to the underside of the supporting panel, these cutouts being in alignment with corresponding further openings 42, 43 in the supporting panel 39.

18. A work table according to Claim 9, characterised in that on the underside of the lateral frame 59 a stop tongue 62 is provided and in that the operating lever is equipped with a radially projecting pin 61 which in the bolted position engages by clamping behind the stop tongue 62.

**Revendications**

1. Etabli (1) à plateau porte-pièce (2), sur support de table (3), sur la face inférieure (4) duquel est prévu un moyen de serrage (5) pour fixation d'une machine de travail à main, en particulier une scie circulaire (9), et qui présente au moins un perçage (11) pour l'outil de la machine de travail, le plateau porte-pièce (2) étant monté autour d'un axe de pivotement (16) sur le support de table (3) à la manière d'un double levier et pouvant être amené par pivotement, à partir de sa position de travail, dans une position de montage tournée de 180° et un moyen de blocage (22) de la position de travail étant prévu sur le support de table, caractérisé par le fait qu'une extrémité (19) du plateau porte-pièce repose, en position de travail, sur une butée (20) de support de table et que l'autre extrémité (21), opposée, du plateau porte-pièce (2) peut, grâce au moyen de blocage (22), s'infléchir élastiquement vers le haut.

2. Etabli selon la revendication 1, caractérisé par le fait que le plateau porte-pièce (2) est constitué par une plaque de fonte ou par une tôle d'acier.

3. Etabli selon la revendication 1 ou 2, carctérisé par le fait que le plateau porte-pièce (2) est carré ou rectangulaire, l'axe (16) étant situé au voisinage d'un de ses axes de symétrie (13).

4. Etabli selon la revendication 2 ou 3, caractérisé par le fait que le plateau porte-pièce (2), dans sa position de travail, est en appui sur la butée (20) du support de table (3), par un bord d'extrémité (19) parallèle à l'axe de pivotement (16), et que le moyen de blocage (22) vient en prise dans la zone du bord d'extrémité opposé (21) du plateau porte-pièce (2).

5. Etabli selon la revendication 4, caractérisé par le fait que la butée (20) est une barre de butée fixée au support de table, alignée parallèlement au bord d'extrémité (19) côté butée et que l'axe de pivotement (16) est situé à côté de l'axe de symétrie correspondant (13) du plateau porte-pièce (2), un peu au-delà, du côté s'écartant de la barre de butée (20).

6. Etabli selon la revendication 4 ou 5, caractérisé par le fait que le plateau porte-pièce (2) est applicable contre la butée (20) grâce au moyen de blocage (22).

7. Etabli selon la revendication 6, caractérisé par le fait que le moyen de blocage (22) est constitué par deux leviers à excentrique (23), situés des deux côtés du plateau porte-pièce (2), qui sont montés sur les cadres latéraux (17) du support de table (3) encadrant le plateau porte-pièce (2), et avec lesquels le plateau porte-pièce (2) est applicable contre la butée (20), avec pression, à partir d'une position d'appui non pressé.

8. Etabli selon la revendication 7, caractérisé par le fait que les leviers à excentrique (23) comportent chacun une cheville-tourillon (24) qui est aplatie d'un côté sur une partie de sa longueur, que les zones aplaties (26) de chevilles sont introduites pour servir d'excentrique dans des ouvertures (27) qui sont ménagées dans des joues latérales (28) descendant du plateau porte-pièce (2) et que les joues latérales (28) présentent chacune, aux extrémités longitudinales opposées, une seconde ouverture (33) pour bloquer le plateau porte-pièce (2) en position de montage.

9. Etabli selon la revendication 7 ou 8, caractérisé par le fait que les leviers à excentrique (23) sont munis, côté extrémité, de leviers de manœuvre (25) à un bras, s'élevant à peu près perpendiculairement aux chevilles tourillons (24), et qui, en position de serrage, sont dirigés à peu près parallèlement au plateau porte-pièce (2) ou vers le bas et qui, en position desserrée, s'élèvent à peu près verticalement.

10. Etabli selon l'une des revendications 7 à 9, caractérisé par le fait que le support de table (3) entoure quatre montants (34, 35) fixés aux extrémités des cadres latéraux (17) et que les montants (35), côté butée, sont reliés entre eux par la barre de butée (20) et les montants (34) opposés par une entretoise (37) située plus bas.

11. Etabli selon la revendication 10, caractérisé par le fait que les montants (34, 35) sont, en outre, étresillonnés par un cadre de pied (36).

12. Etabli selon l'une ou plusieurs des revendications 1 à 11, caractérisé par le fait que le plateau porte-pièce (2) comporte plusieurs perçages (11, 14, 15) pour les outils de différentes machines de travail.

13. Etabli selon l'une ou plusieurs des revendications précédentes, caractérisé par une plaque de protection de fente (46) en matière usinable, recouvrant le perçage (40) pour lame de scie du plateau porte-pièce (39), qui s'applique, des deux côtés du perçage (40), contre la face inférieure du plateau porte-pièce (39) et qui grâce au moyen de serrage (5) par la scie circulaire, est coincée, de façon amovible, entre la face inférieure du plateau porte-pièce (39) et la plaque de guidage (9a) de la scie.

14. Etabli selon la revendication 13, caractérisé par le fait que la plaque de protection de fente (46) présente un perçage en forme de fente (47) pour le passage de la lame de scie (10) qui est plus étroite que le perçage (40) du plateau porte-pièce (39) et dont la zone de bord (48) est relevée comme recouvrement dans le perçage (40) du plateau porte-pièce (39).

15. Etabli selon la revendication 14, caractérisé par le fait que la zone de bord relevée (48) est en forme de collet continu périphérique.

16. Etabli selon l'une des revendications 13 à 15, caractérisé par le fait que le plateau porte-pièce (39) est muni, le long de deux tangées parallèles au perçage (40), d'empreintes coniques (49) dont les pointes inférieures sont chacune coupées à la même hauteur et que la plaque de protection (46) est munie de deux bandes marginales (51, 52) recourbées deux fois à cette hauteur, dans lesquelles sont prévus plusieurs trous (53) de fixation des boulons (50) du moyen de serrage (5), alignés avec les trous (41) du plateau porte-pièce (39).

17. Etabli selon l'une ou plusieurs des revendications précédentes, caractérisé par le fait que, dans la plaque de protection (46), sont prévus d'autres perçages (53, 54) pour les outils de scies à guichet, défonçeuses à bois, ou analogues, fixables sur la face inférieure du plateau porte-pièce, chacun alignés avec d'autres perçages correspondants (42, 43) du plateau porte-pièce (39).

18. Etabli selon la revendication 9, caractérisé par le fait que sur la face inférieure du cadre latérale (59) est prévue une butée (62) et que le levier de manœuvre est muni d'un tenon en saillie radiale (61) qui, en position de verrouillage, vient se coincer derrière la butée (62).

EP 0 224 653 B1

Fig.1

Fig. 2

Fig.3

*Fig.4*

*Fig.5*

*Fig.6*

*Fig.7*

Fig. 8

Fig. 9

51    54  47    52

*Fig.10*

43    40    41    39

XI

57

9a    52    50

10    6

56

9a

9a    41    49

48    40    46    39

*Fig.11*

*Fig.12*

*Fig.13*

*Fig.14*